# EUROPÄISCHE PATENTSCHRIFT

(11) **EP 0 633 460 B1**
(45) Veröffentlichungstag und Bekanntmachung des Hinweises auf die Patenterteilung: **22.04.1998**
(21) Anmeldenummer: 94107776.0
(22) Anmeldetag: 19.05.1994
(51) Int. Cl.: G01M 3/16, G01M 3/18

(54) **Einrichtung zur Langzeit-Lecküberwachung an doppelwandigen Gefässsystemen, insbesondere doppelwandigen Tankböden**
Long-term leak monitoring device for double-walled containers, in particular double-walled container bottoms
Dispositif de surveillance prolongée pour réservoirs à double paroi, en particulier des fonds à double paroi

(30) Priorität: 08.07.1993 DE 4322859
(43) Veröffentlichungstag der Anmeldung: 11.01.1995
(73) Patentinhaber: Müller, Sepp, D-83620 Feldkirchen-Westerham (DE)
(72) Erfinder: Müller, Sepp, D-83620 Feldkirchen-Westerham (DE)
(74) Vertreter: MEISSNER, BOLTE & PARTNER

(56) Entgegenhaltungen:
- EP-A- 0 456 094
- GB-A- 2 245 977
- US-A- 4 538 141

## Beschreibung

Die Erfindung betrifft eine Einrichtung zur Langzeit-Lecküberwachung an doppelwandigen Gefäßsystemen, insbesondere an doppelwandigen Tankböden gemäß dem Oberbegriff des Patenanspruches 1.

Aus Gründen des Umweltschutzes werden beispielsweise Flachbodentanks mit einem Doppelboden versehen, wodurch bei Korrosionserscheinungen bzw. dem Auftreten eines Lecks im Zwischenboden der äußere, zweite Boden eine Sicherheit gegen das Austreten von im Tank befindlichen umweltgefährdenden Stoffen gewährleistet.

Konstruktionsbedingt muß der Raum zwischen den beiden Böden, d. h. dem Zwischenboden und dem äußeren Boden des Flachbodentanks ständig überwacht werden, um feststellen zu können, ob der Zwischenboden ein Leck aufweist, um dann nach dem Feststellen einer derartigen Leckage den Tank zu entleeren und eine Reparatur des undichten oder beschädigten Zwischenbodens vornehmen zu können.

Eine solche Überwachung wird bisher ausschließlich durch sogenannte Vakuumüberwachungsanlagen durchgeführt. Hierfür wird der Raum zwischen den beiden Böden mit einem definierten Vakuum beaufschlagt, wobei durch eine Drucküberwachungsvorrichtung festgestellt wird, ob sich das Vakuum aufgrund eines Lecks verändert. Für jeden Tank ist eine separate Vakuumüberwachungsanlage erforderlich, welches die Kosten für ein derartiges System erhöht. Ein weiterer Nachteil der Vakuum-Lecküberwachungseinrichtung besteht darin, daß nicht festgestellt werden kann, ob ein festgestellter Druckverlust auf Undichtheiten in Systemflanschverbindungen, Undichtheiten des äußeren Bodens oder Undichtheiten des Zwischenbodens zurückzuführen ist. Im Zweifel muß mit erheblichem Aufwand der Tank entleert werden, um zu überprüfen, wo die Ursache für die festgestellte Undichtheit liegt.

Ebenso ist es unmöglich, beim bekannten Vakuumüberwachungssystem den Ort der Undichtheit möglichst genau zu bestimmen, um Reperaturarbeiten am jeweiligen Boden auf ein Mindestmaß beschränken zu können. Dies ist insbesondere dann problematisch, wenn die zu überwachenden Flachbodentanks einen Durchmesser von mehr als 10 m aufweisen. Es dürfte ersichtlich sein, daß die Lecksuche bei derartigen Tanks außerordentlich zeitaufwendig ist.

Letztendlich ist es bei den bisher verwendeten Vakuumüberwachungsanlagen unmöglich, die Größe des Lecks, z. B. über die Ausbreitungsgeschwindigkeit eindringender Flüssigkeit fest zustellen, so daß schwer abschätzbar ist, ob der Tank sofort entleert werden muß oder ob über eine vorgegebene Zeit mit geringem Sicherheitsrisiko ein weiteres Betreiben möglich ist.

Aus der EP 0 456 094 A2 ist ein Flachbodentank und ein Verfahren zur Leckageüberwachung von Flachbodentanks bekannt, wobei der Tank einen äußeren und einen inneren Tankboden aufweist und von beiden Tankböden eine Kammer gebildet wird. In die erwähnte Kammer wird dann ein Schichtaufbau vorgenommen, wie nachstehend beschrieben.
Auf den äußeren Tankboden wird eine erste Bitumenschicht aufgebracht, die nach oben mit einer flüssigkeitsundurchlässigen Sperrfolie abgeschlossen ist. Eine weitere, allerdings flüssigkeitsdurchlässige Schicht wird auf der Sperrfolie angeordnet, wobei diese flüssigkeitsdurchlässige Schicht z.B. aus porösem Bitumen oder Kies besteht. In der flüssigkeitsdurchlässigen Schicht befinden sich flächig verlegte, an sich bekannte Sensorkabel, deren elektrische Eigenschaften sich bei Kontakt mit dem Leckmedium meßbar ändern. Durch die Ausbildung der ersten Bitumenschicht in Verbindung mit der Sperrfolie ist es nicht möglich zu erkennen, ob der äußere Boden eine Leckage aufweist, da eindringende Flüssigkeit von der Sperrfolie zurückgehalten wird. Damit kann also der Zustand des äußeren Bodens, der für die Tanksicherheit wesentlich ist, nicht kontrolliert werden. In dem Falle, wo ein Tankboden bereits mit einem Doppelboden versehen ist oder nachgerüstet werden soll, ist es nahezu unmöglich, die aus der EP 0 456 094 A2 bekannten Schichten, nämlich die Bitumenschicht, die Sperrfolie und die flüssigkeitsdurchlässige Ausgleichsschicht auf- bzw. einzubringen. Letztendlich wird durch die flüssigkeitsdurchlässige Ausgleichsschicht, die aus sogenanntem Drainasphalt oder Kies besteht, zwar das Leckmedium aufgenommen, jedoch dieses auch aufgesaugt und aufgrund vorhandener Kapillarwirkungen unerwünscht in alle Richtungen verteilt, so daß der Ort der Leckage und die Größe dieser nicht exakt bestimmt werden kann.

Die GB 2 245 977 A zeigt eine Anordnung und ein Verfahren zum Detektieren von Leckagen mittels eines speziellen Sensorkabels. Einzelheiten zur konstruktiven Ausführung eines Überwachungsraums sowie zur Kabelanordnung in doppelwandigen Tankböden sind der GB 2 245 977 A nicht zu entnehmen. Gleiches gilt für die US 4 538 141, die eine Anordnung und ein Verfahren zur Detektion von Wasser in Räumen zeigt, die mit hochwertiger Computertechnik versehen sind. Dort wird unterflur ein Gebilde aus Sensorkabeln und Ummantelungen angeordnet, um Flüssigkeit, die sich im Raum befindet bzw. die sich am oder im Boden sammelt, zu erfassen. Außerdem erfüllt die Kabelaufnahme keine Tragfunktion für den Fußboden, sondern dient lediglich zum Schutz des einen Leiter aufweisenden Gewebes.

Es ist daher Aufgabe der Erfindung, eine bekannte Einrichtung zur Langzeit-Lecküberwachung an doppelwandigen Gefäßsystemen, insbesondere doppelwandigen Tankböden, so weiterzubilden, daß mit geringem Aufwand feststellbar ist, ob ein Leck im äußeren Bereich oder im Zwischenboden aufgetreten ist, und wobei mit der Einrichtung eine Abschätzung der Leckgröße möglich und weiterhin eine ausreichende mechanische Stabilität des nachgerüsteten Doppelbodens gewährleistet ist.

Die Lösung der Aufgabe der Erfindung erfolgt mit den Merkmalen des Patentanspruches 1, wobei die abhängigen Ansprüche vorteilhafte Ausgestaltungen und Weiterbildungen des Erfindungsgegenstandes zeigen.

Demnach wird erfindungsgemäß der äußere Boden mit einem Gefälle versehen und auf den äußeren Boden eine metallische Zwischenlage im wesentlichen senkrecht zur Gefällerichtung angeordnet. Die metallische Zwischenlage weist Aussparungen auf, so daß eine in den Überwachungsraum eindringende Flüssigkeit entlang der Gefällerichtung sich ungehindert vom Sensorkabel ausbreiten kann. Dabei kann sowohl die Flüssigkeit durch eine Leckage im äußeren Boden als auch durch eine Leckage im inneren Boden in den Überwachungsraum gelangen.

Durch die Selektivität des eingesetzten Sensorkabels ist es möglich festzustellen, welcher Art die Flüssigkeit ist, so daß Rückschlüsse gezogen werden können, ob es sich um ein Leck im Außen- oder Innenboden handelt. Durch die beanspruchte Merkmalskombination der metallischen Zwischenlage ist eine ausreichende mechanische Stabilität des doppelwandigen Gefäßsystems gewährleistet und es kann in Verbindung mit den Aussparungen in der metallischen Zwischenlage sowie dem vorgesehenen Gefälle die Ausbreitungsgeschwindigkeit einer Leckage und damit die Größe selbiger bestimmt werden.

Die Erfindung greift also darauf zurück, an der Innenseite des äußeren Bodens, z. B. eines doppelwandigen Tankbodens, einen Überwachungsraum zu bilden, welcher ein Sensorkabel aufnimmt, welches in der Lage ist, eintretende Flüssigkeiten durch lokale Veränderung der Dielektrizitätskonstanten des Sensorkabels zu bestimmen. Zur Feststellung des jeweils eingedrungenen Stoffes sowie des Ortes wird das Sensorkabel mit Hochfrequenzenergie nach dem Impuls-Echo-Verfahren beaufschlagt, wobei in einer nachgeschalteten Auswerteeinrichtung die reflektierten Meßdaten mit einem vorab aufgenommenen, gespeicherten Normalbild verglichen werden. Durch den ständigen Vergleich der aktuellen, reflektierten Meßdaten mit dem Normalbild kann eine Leckageentwicklung bzw. -ausbreitung beobachtet werden. Gleichzeitig können mehrere Leckagen an unterschiedlichen Orten bestimmt werden.

Die erfindungsgemäße Einrichtung ist in einfacher Weise nachrüstbar, in dem der Überwachungsraum mit Hilfe eines zusätzlichen Bodens nachträglich in einen vorhandenen Tank eingebaut wird, wodurch mit geringem Aufwand auf veränderte gesetzliche Bestimmungen beispielsweise des Wasserhaushaltsgesetzes reagiert werden kann. Insbesondere ist es dann möglich, die Lagerung von wassergefährdenden Flüssigkeiten so vorzunehmen, daß eine Verunreinigung oder eine nachteilige Veränderung der Gewässer vermeidbar ist.

Die Erfindung soll nachstehend anhand von Ausführungsbeispielen und von Figuren näher erläutert werden.

Hierbei zeigen
- Fig. 1: die Darstellung des Tankdoppelbodens eines stehenden zylindrischen Flachbodentanks mit Überwachungsraum;
- Fig. 2a: die Darstellung des Wandanschlusses zur Einführung des Sensorkabels und zur Dichteprüfung, wobei der Wandanschluß zur Kabelein- bzw. -ausführung, bezogen auf den Doppelboden, dient;
- Fig. 2b: eine Detailschnittdarstellung längs der Linie AA gemäß Fig. 2a zur Erläuterung des Übergangs des Einführrohres zur Zwischenlage;
- Fig. 2c: eine Detailschnittdarstellung längs der Linie BB gemäß Fig. 1 zur Erläuterung der Ausführung der Zwischenlage;
- Fig. 3: eine erste Ausführungsform der Sensorkabelverlegung;
- Fig. 4: eine zweite Ausführungsform der Sensorkabelverlegung.

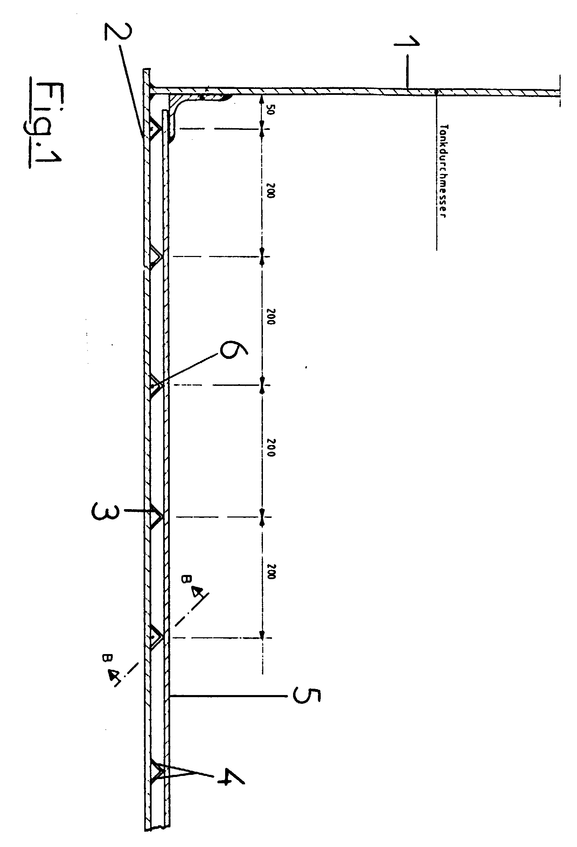

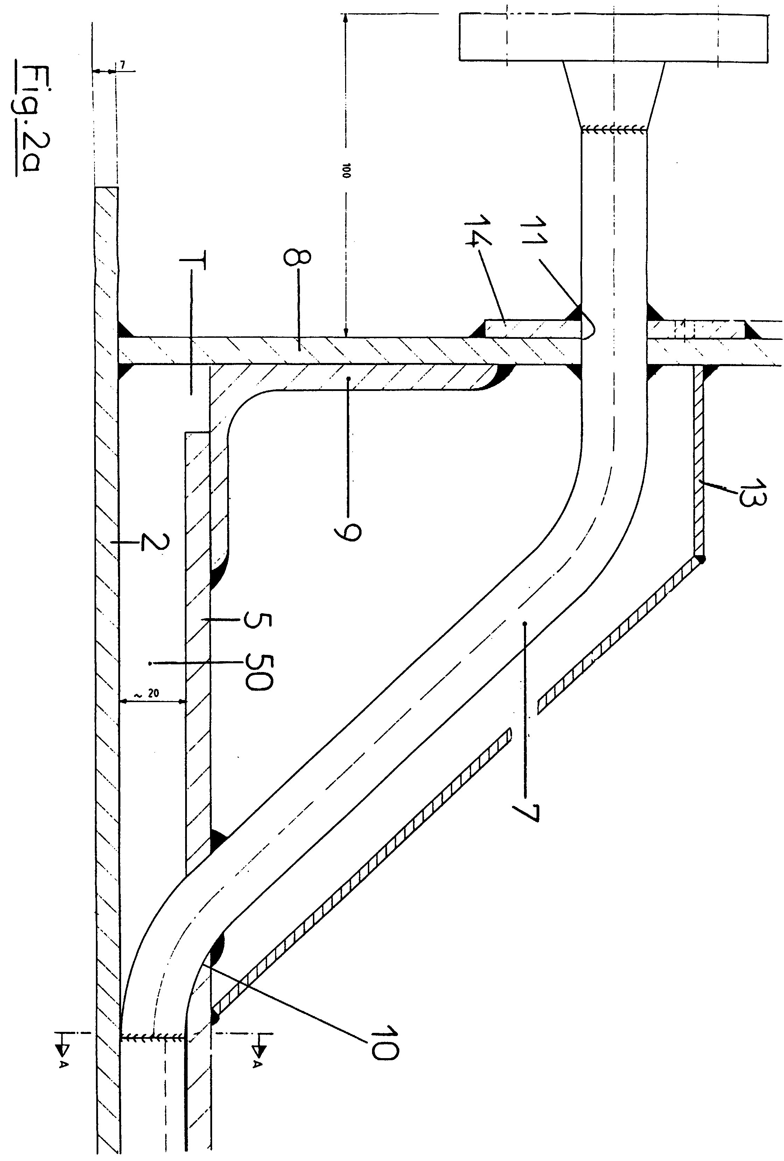

Beim Ausführungsbeispiel gemäß Fig. 1 wird davon ausgegangen, daß in einen vorhandenen zylindrischen Flachbodentank nachträglich ein Doppelboden einschließliche eines Überwachungsraumes ausgebildet wird.

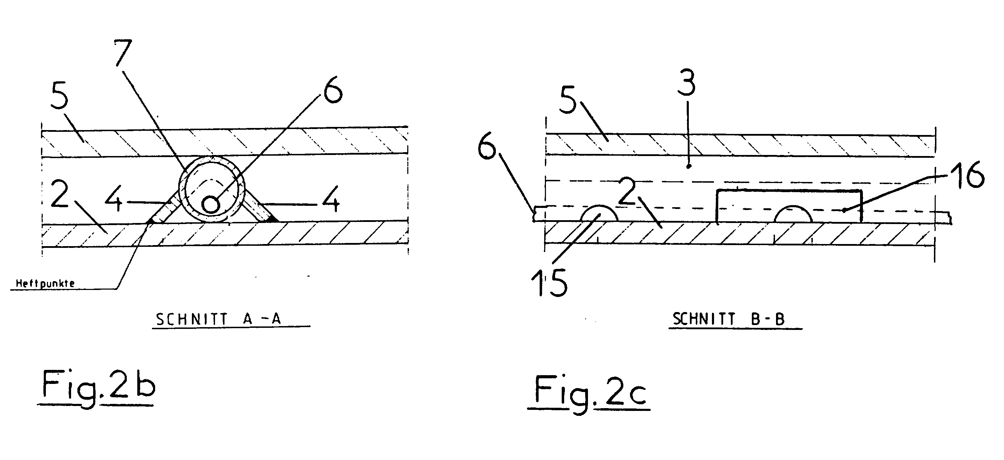

Der dem Ausführungsbeispiel zugrundeliegende zylindrische Flachbodentank besitzt eine Seitenwandung 1 mit einem unteren bzw. äußeren Boden 2. Auf den äußeren Boden 2 wird eine Zwischenlage 3 aufgebracht, die beispielsweise aus gleichschenkligem Winkelstahl besteht. Die beiden Schenkel 4 der Winkelstahl-Zwischenlage 3 (s. auch Fig. 2b) werden mit dem äußeren Boden 2 durch Heftschweißen verbunden.

Bereits an dieser Stelle sei angemerkt, daß anstelle einer Winkelstahl-Zwischenlage 3 auch Profile mit einer anderen Querschnittsfläche, z. B. Vierkantprofil, verwendet werden können. Ebenso ist es möglich, auf die Innenseite des äußeren Bodens 2 ein Netz aus metallischen Vollprofilen aufzulegen, wobei der Abstand zwischen dem äußeren Boden 2 und dem Zwischenboden bzw. inneren Boden 5 einstellbar ist. In die Gitter- oder Maschenstruktur des Vollprofiles werden dann beispielsweise mäanderförmig Auskerbungen vorgenommen, welche der Aufnahme des Sensorkabels 6 dienen. Um ein ungehindertes Ausbreiten von Flüssigkeit auf dem äußeren Boden 2 zu gewährleisten, ist es erforderlich, daß das metallische Vollprofil der Gitter- oder Maschenstruktur eine Oberfläche aufweist, die beispielsweise wie bei Baustahl üblich, profiliert ist.

Bei der vorteilhaften Ausführungsform gemäß den Figuren 1 bis 2c wird das bereits erwähnte Sensorkabel 6 in einer vorgegebenen Art und Weise im Inneren der Winkelstahl-Zwischenlage 3 verlegt. Hierdurch ist sichergestellt, daß beim Auflegen bzw. Verschweißen des Zwischen- bzw. inneren Bodens 5 eine Beschädigung des Sensorkabels 6 ausgeschlossen ist. Gleichzeitig wird beim späteren Betrieb der Überwachungseinrichtung durch die definierte Lage des Sensorkabels 6 eine eindeutige Bestimmung des Ortes, an dem das Leck aufgetreten ist, möglich.

Die Fig. 2a zeigt die Darstellung des Wandanschlusses mittels eines Verbindungsrohres 7. Der Wandanschluß ist so ausgeführt, daß die Doppelwandigkeit bzw. der durch den äußeren Boden 2 und den inneren Boden 5 gebildete Überwachungsraum 50 unbeeinträchtigt bleibt. An der Außenseite verfügt das Verbindungsrohr 7 über einen Flansch 8. Das Verbindungsrohr 7 mit dem Flansch 8 kann zur Druckprüfung des Überwachungsraumes 50 verwendet werden.

Durch das Innere des Verbindungsrohres 7 wird das Sensorkabel 6 ein- und ausgeführt.

Das Verbindungsrohr 7 selbst ist unter Bildung einer Stufe gebogen, wobei der Durchtritt des Verbindungsrohres 7 durch die Seitenwandung 8 oberhalb eines umlaufenden Winkels 9 zur Befestigung des inneren Bodens 5 erfolgt. Der umlaufende Winkel 9 dient gleichzeitig dem Toleranzausgleich T beim Einschweißen des inneren Bodens 5.

Über eine Öffnung 10 ist das stufenförmig gebogene Verbindungsrohr 7 in den Überwachungsraum 50, d. h. den Raum zwischen äußeren Boden 2 und inneren Boden 5 eingeführt und dicht verschweißt ist.

Wie aus Fig. 2b ersichtlich, wird das Verbindungsrohr 7 stumpf gegen eine ausgewählte Zwischenlage 3, im gezeigten Beispiel dem gleichschenkligen Winkelstahl, geschweißt. Hierdurch ist sichergestellt, daß das Sensorkabel 6 bis zur Zwischenlage 3 hin geschützt geführt ist. Aus konstruktiven Gründen ist im Inneren des Tanks oberhalb des Verbindungsrohres 7 eine Abdeckplatte 13 vorgesehen. Im Durchtrittbereich 11 ist eine äußere Abdeck- bzw. Verstärkungsplatte 14 vorgesehen.

Im gezeigten Beispiel ist der äußeren Boden 2 des zylindrischen Flachbodentanks im wesentlichen eben ausgebildet, wobei der Tankboden um einen definierten Winkel geneigt ist. Um das Ausbreiten einer möglicherweise durch ein Leck im Zwischenboden 5 in den Überwachungsraum 50 eindringenden Flüssigkeit nicht zu behindern und den örtlichen Verlauf des Leckes feststellen zu können, sind gemäß Fig. 2c die Zwischenlagen 3 mit Aussparungen 15, 16 versehen. Beispielsweise besitzt die Aussparung 15 eine Halbkreisform oder die Aussparung 16 ist im wesentlichen rechteckig ausgeführt. Die Aussparungen 15, 16 können entweder vor dem durch Schweißen erfolgenden Befestigen der Zwischenlage 3 auf den äußeren Boden 2 eingebracht werden, oder es ist nach dem Verschweißen mittels eines geeigneten Werkzeuges ein Heraustrennen eines vorgegebenen Bereiches aus der Zwischenlage 3 möglich.

Die Größe der Aussparungen 15, 16 sind dabei so gewählt, daß die mechanische Festigkeit der Zwischenlagen 3 im wesentlichen erhalten bleibt und das Hindurchströmen eindringender Flüssigkeit nur gering behindert wird.

Es sei angemerkt, daß der äußeren Boden 2 des Tanks auch über Sicken verfügen kann oder als Rundboden ausführbar ist. Auch in diesem Falle ist eine Bestimmung des Leckageortes möglich, wobei durch das sich ausbildende Gefälle derartiger Böden es zweckmäßig ist, die Zwischenlage 3 so auszubilden, daß ein schnelles Ausbreiten eindringender Flüssigkeit behindert wird. Hierdurch ist es leichter möglich, den ursprünglichen Ort des Eindringens der Flüssigkeit festzustellen.

Das verwendete Sensorkabel 6 besitzt eine vorzugsweise koaxiale Struktur, wobei das Dielektrikum, welches zwischen dem Innen- und Außenleiter des koaxialen Sensorkabels 6 angeordnet ist, die Eigenschaft besitzt, seine Dielektrizitätskonstante ε bei Kontakt mit Flüssigkeiten zu verändern. Durch die Auswertung von Impuls-Hochfrequenzsignalen auf der Basis der bekannten Impulsreflektions-Meßtechnik ist es möglich, den Ort und die Stärke der Veränderung der Dielektrizitätskontante im Sensorkabel 6 zu bestimmen, so daß nicht nur feststellbar ist, an welcher Stelle des Sensorkabels eine derartige Veränderung eingetreten ist, sondern auch anhand des Gradienten eines Reflexionssignales bestimmt werden kann, ob beispielsweise durch den äußeren Boden 2 Wasser oder Wasserdampf eingedrungen ist oder über den inneren Boden 5 das im Tank befindliche Medium sich im Überwachungsraum 50 befindet.

Das Sensorkabel 6 ist so ausgebildet, daß auch nichtleitende Flüssigkeiten problemlos detektiert werden können. Durch die genutzte Impulsreflexionstechnik können auch mehrere Lecks auf einem einzigen Sensorkabel 6 detektiert, geortet und analysiert werden. Vor dem Beginn der eigentlichen Überwachung wird mit einer elektronischen Einrichtung ein Echobild des Sensorkabels 6 im Normalzustand aufgenommen. Die Reflexion der Impulse auf dem Sensorkabel wird dabei als sogenanntes Normalbild einem Speicher abgelegt. Verschmutzungen der Kabel oder im Überwachungsraum befindliche Baufeuchten können dadurch miteingemessen werden. Hierdurch ist das Auslösen eines Fehlalarms vermeidbar. Im Überwachungszustand werden dann die aktuellen Impuls-Echobilder mit dem Normalbild bzw. mit mehreren in einer Referenzliste abgelegten Normalbildern verglichen. Eine mögliche Leckage durchfeuchtet dann das Sensorkabel 6 an bestimmten Stellen, wodurch sich das jeweilige Echobild verändert und ein Alarm ausgelöst wird. Das im Alarmfall erhaltene Echobild wird dann wiederum gespeichert und mit weiteren, zu einem späteren Zeitpunkt einlaufenden Echobildern verglichen, so daß die Ausbreitung bzw. die Ausbreitungsgeschwindigkeit der durch das Leck eingetretenen Flüssigkeit berechnet werden kann. Es wie angemerkt, daß das verwendete Sensorkabel in der Lage ist, sowohl wäßrige Flüssigkeiten als auch Kohlenwasserstoffe zu erkennen.

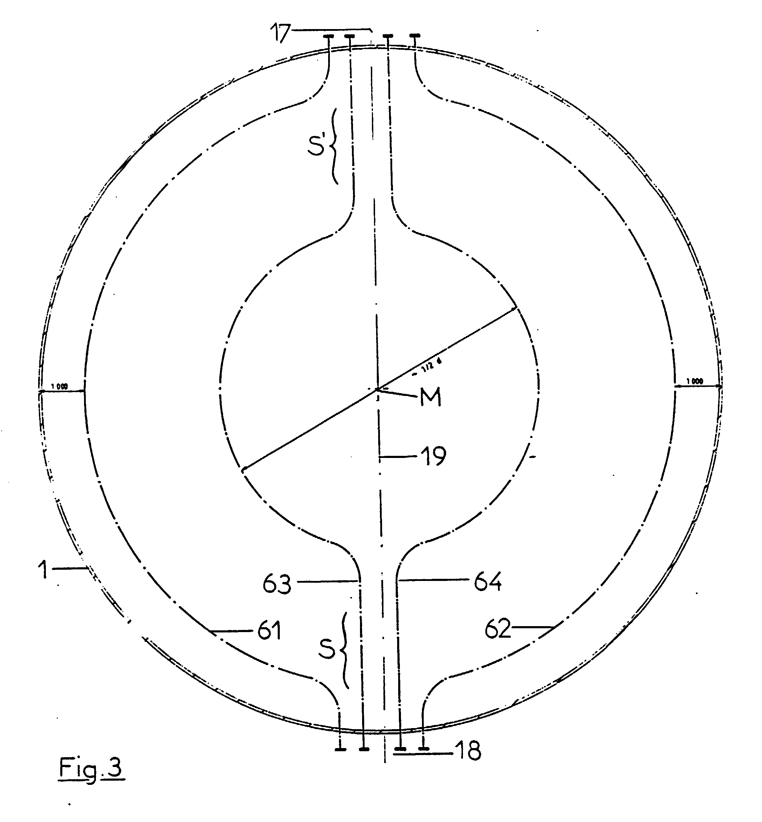

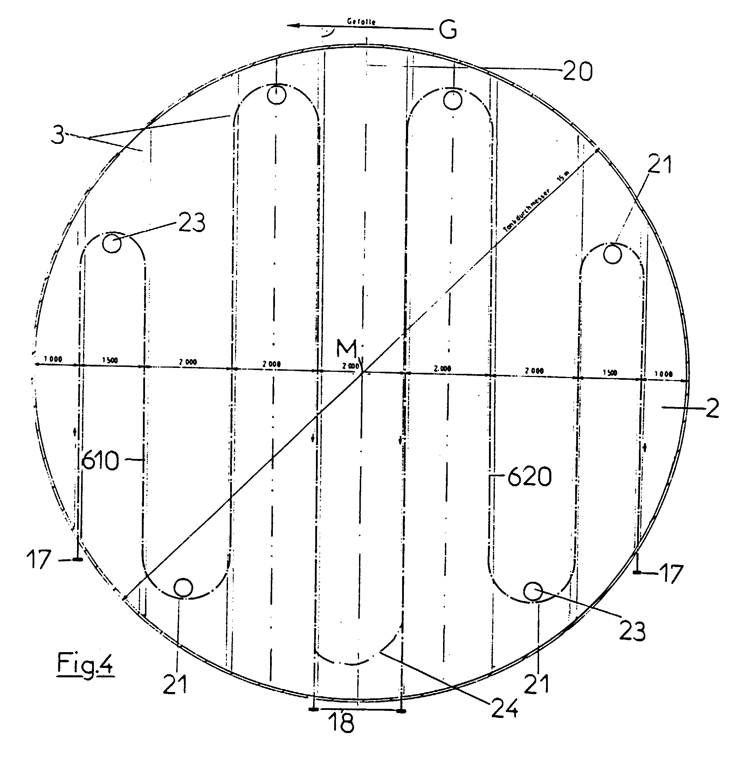

Mit den Figuren 3 und 4 soll die beispielsweise Verlegung des Sensorkabels 6 auf der Innenfläche des äußeren Bodens 2 weitgehend innerhalb der Zwischenlagen 3 erläutert werden.

Fig. 3 zeigt jeweils an gegenüberliegenden Seiten der Seitenwandung 1 befindliche Sensorkabeleingänge 17 und Sensorkabelausgänge 18. Ein erstes Sensorkabel 61 verläuft dabei im wesentlichen gleich beabstandet zur Seitenwandung 1 halbkreisförmig zwischen dem Sensorkabeleingang 17 und dem Sensorkabelausgang 18. Bezogen auf eine Symmetrieachse 19 verläuft spiegelbildich zum ersten Sensorkabel 61 ein zweites Sensorkabel 62 gleich beabstandet zum gegenüberliegenden Teil der Seitenwandung 1. Ein drittes Sensorkabel 63 wird über eine vorgegebene Strecke S parallel zur Symmetrieachse 19 derart geführt, daß dann ein zum Mittelpunkt M des äußeren Bodens konzentrischer Halbkreisverlauf entsteht, der an der gegenüberliegenden Seite wieder in eine vorgegebene, zur Symmetrieachse parallele Strecke S übergeht. Der Ort der Anordnung eines vierten Sensorkabels 64 ergibt sich durch Spiegelung des dritten Sensorkabels 63 an der Symmetrieachse 19. Die beiden Halbkreise des dritten und des vierten Sensorkabels 63, 64, welche durch Spiegelung an der Symmetrieachse 19 einen Vollkreis bilden, sind so ausgeführt, daß der Vollkreisdurchmesser im wesentlichen dem 0,5fachen des Durchmessers des Tanks entspricht.

In einer weiteren Ausführungsform zur beispielsweisen Verlegung des Sensorkabels gemäß Fig. 4 wird dieses mäanderförmig verlegt. Fig. 4 zeigt zwei an einer Symmetrieachse 20 gespiegelte Mäander eines ersten Sensorkabels 610 und eines zweiten Sensorkabels 620. Die jeweiligen Sensorkabelein- 17 und -ausgänge 18 befinden sich in diesem Falle auf einer einzigen Seite der Seitenwandung 1. Es liegt im Sinne der Erfindung, bei der Ausführungsform gemäß Fig. 4 einen Verbindungsmäander 24 im Inneren des Tanks vorzusehen, so daß auf die Sensorkabelausgänge 18 verzichtet werden kann.

In den Ausführungsformen der Sensorkabelverlegung gemäß Figuren 3 und 4 ist der weit überwiegende Teil der Sensorkabel 610, 620 von der Zwischenlage 3, z. B. dem gleichschenkligen Winkelstahl bedeckt. Selbstverständlich können, wenn konstruktiv erforderlich, weitere Zwischenlagen 3, z. B. an den strich-doppelpunktierten Linien zwischen den Mäandern gemäß Fig. 4, vorgesehen sein.

Die Zwischenlagen 3 sind gemäß der Fig. 4 so ausgebildet, daß diese im wesentlichen senkrecht zur Gefällerichtung G an der Innenseite des äußeren Bodens 2 befestigt sind. Hierdurch wird die Bestimmung der Ausbreitungsgeschwindigkeit möglicherweise in den Überwachungsraum 50 eindringender Flüssigkeit erleichtert.

Zweckmäßigerweise ist das Sensorkabel 6 derart innerhalb der Zwischenlagen 3 angeordnet, daß ein guter Kontakt mit der Innenseite des äußeren Bodens 2 hergestellt ist. Hierdurch ist gewährleistet, daß bestimmte Mengen eindringender Flüssigkeit unter dem Sensorkabel 6 hindurchfließen. Da jedoch das Dielektrikum des Sensorkabels 6 über ausgeprägte Kapillareigenschaften verfügt, ist im Regelfall auch eine weniger enge Berührung mit der Innenseite des äußeren Bodens 2 für eine effektive Überwachung des Überwachungsraumes 50 unschädlich. Die kreisbogenförmigen Mäanderabschnitte 21 sind nicht von der Zwischenlage 3 bzw. dem gleichschenkligen Winkelstahl bedeckt und können zweckmäßigerweise über Umlenkrollen 23 verfügen, die gegebenenfalls drehbar an der Innenseite des äußeren Bodens 2 befestigt sind. Durch die Umlenkrollen 23 wird, falls eine Reperatur erforderlich ist, das Aus- bzw. Einfädeln des Sensorkabels 6 in den Überwachungsraum erleichtert.

Alternativ kann das Sensorkabel 6 die Innenseite des äußeren Bodens 2 spiralförmig bedecken. Dies ist insbesondere dann vorteilhaft, wenn der äußeren Boden 2 zum Mittelpunkt M hin mit einem Gefälle verlaufend, versehen ist, d. h. der Mittelpunkt M an der tiefsten Stelle liegt.

In einem erprobten Beispiel betrug der Tankdurchmesser 15 m und der Abstand der mäanderförmig angeordneten Sensorkabel durchschnittlich 1,5 m. Durch eine 1,8 mm Bohrung wurde an einer am weitestens vom Sensorkabel 6 entferntesten Stelle und oberhalb des Gefälles G leichtes Heizöl in den Überwachungsraum 50 eingefüllt. Nach durchschnittlich 5 bis 6 min. wurde erster Lecküberwachungsalarm gegeben, wobei der Ort des Auftreffens der Flüssigkeit auf das Sensorkabel 6 exakt bestimmt werden konnte. Aufgrund des bekannten Gefälles ist dann das Bodensegment, welches das Leck aufweist, leicht festzustellen. Ein weiterer Alarm wurde dann nach kurzer Zeit ausgelöst, da das fließende Medium den nächsten gefälleabwärtsliegenden Sensorkabelabschnitt erreicht hatte. Bereits aus diesen zwei Messungen ließ sich die Fließgeschwindigkeit und die Größe des Lecks ermitteln. Versuchsweise wurde dann an einer zum ersten Leck weit entfernten Stelle das Sensorkabel 6 mit Wasser in Kontakt gebracht. Das mit der Einrichtung zur Langzeit-Lecküberwachung gekoppelte elektronische Auswertesystem löste dann einen dritten Alarm aus, wobei erkennbar war, daß es sich bei dem den dritten Alarm auslösenden Medium um einen anderen Stoff, nämlich Wasser, handelte.

Mit der erfindungsgemäßen Einrichtung wird es also möglich, die bisher bekannten Vakuum-Lecküberwachungseinrichtungen abzulösen und einen qualitativen Sprung bei der Überwachung zu erreichen, da nicht nur die Tatsache des Vorhandenseins eines Lecks, sondern auch der Ort und das durch das Leck strömende Medium erkennbar ist. Mit der erfindungsgemäßen Einrichtung können vorhandene Tankanlagen, insbesondere stehende Flachbodentanks, in einfacher Weise nachgerüstet werden und so die wasserrechtlichen Bauartzulassungen erfüllt werden. Durch die erfindungsgemäße Verwendung eines speziellen Sensorkabels, dessen Dielektrizität durch Einfluß von Flüssigkeiten veränderbar ist, können Tanks mit beliebigem Innendurchmessern ohne großen Aufwand überwacht werden. Da es möglich ist, einen Multiplex oder einen hintereinander geschalteten Betrieb mehrere Überwachungseinrichtungen vorzusehen, werden die Kosten für die elektronische Erzeugung des genutzten Impulssignales bzw. die Auswertung des Impulsechos minimiert.

Durch die Merkmale der erfindungsgemäßen Einrichtung ist sichergestellt, daß einerseits die Stabilität eines nachträglich errichteten Doppelwandsystems gegeben, ein ausreichender Schutz und eine exakte Lage des Sensorkabels und eine definierte Beeinflußung der sich im Leckagefall ausbreitenden Flüssigkeit sichergestellt ist.

## Patentansprüche

1. Einrichtung zur Langzeit-Lecküberwachung an doppelwandigen Gefäßsystemen, insbesondere doppelwandigen Tankböden, umfassend
einen Überwachungsraum zwischen einem äußeren Boden (2) und einem inneren Boden (5), wobei der innere Boden (5) über eine Zwischenlage (3), die mit dem äußeren Boden (2) verbunden ist, abgestützt wird, sowie ein flüssigkeitsselektives Sensorkabel (6), welches mindestens in freien Abschnitten der Zwischenlage (3) angeordnet ist, wobei das Sensorkabel (6) entsprechend der Art und Menge von in den Überwachungsraum eindringender Flüssigkeit lokal seine Dielektrizitätskonstante ändert und wobei die Art sowie der Ort des Flüssigkeitseindringens mittels Beaufschlagen des Sensorkabels durch Impulsechos bestimmt wird,
dadurch gekennzeichnet,
daß mindestens Teile einer metallischen, mit dem äußeren Boden (2) verbundenen Zwischenlage (3) im wesentlichen senkrecht zu einer Gefällerichtung (G) des äußeren Bodens (2) angeordnet sind und die metallische Zwischenlage (3) Aussparungen (15, 16) aufweist, so daß eine in den Überwachungsraum (50) eindringende Flüssigkeit im wesentlichen entlang der Gefällerichtung (G) sich hin zum Sensorkabel (6) ausbreiten kann, so daß die Ausbreitungsgeschwindigkeit und die Größe einer Leckage bestimmbar sind.

2. Einrichtung nach Anspruch 1,
dadurch gekennzeichnet,
daß die mit der Innenseite des Bodens verschweißte Zwischenlage (3) aus gleichschenkligem Winkelstahl besteht und die Aussparungen (15, 16) kreisbogen- und/oder rechteckförmig und/oder dreieckförmig in den Schenkeln (4) des Winkelstahls jeweils versetzt gegenüberliegend ausgebildet sind.

3. Einrichtung nach Anspruch 1 und 2,
dadurch gekennzeichnet,
daß die Zwischenlage (3) so angeordnet ist, daß ein mäanderförmiges Verlegen des Sensorkabels (6) mindestens teilweise innerhalb der Zwischenlage (3) möglich ist.

4. Einrichtung nach Anspruch 1 und 2,
dadurch gekennzeichnet,
daß das Sensorkabel (6) spiralförmig auf der Innenseite des äußeren Bodens (2) verlegt ist.

5. Einrichtung nach Anspruch 1 und 2,
dadurch gekennzeichnet,
daß das Sensorkabel (6) auf konzentrischen Kreisen auf der Innenseite des äußeren Bodens (2) mit unterschiedlichen Radien verlegt ist, wobei mehrere Sensorkabelein- und Sensorkabelausführungen (17, 18) zum Verbinden und Anschließen des Sensorkabels (6) an eine Auswertevorrichtung außerhalb des Tanks vorgesehen sind.

6. Einrichtung nach einem der Ansprüche 1 bis 5,
dadurch gekennzeichnet,
daß das Sensorkabel (6) ein Koaxialkabel mit durch Flüssigkeit oder Feuchtigkeitseinwirkung sich reversibel veränderbaren Dielektrikum ist, wobei für Eichzwecke ein- oder mehrmalig ein Hochfrequenz-Impulsechobild des Sensorkabels (6) im Normalzustand bestimmt wird.

7. Einrichtung nach einem der Ansprüche 1 bis 6,
dadurch gekennzeichnet,
daß das Gefäßsystem ein im wesentlichen zylindrischer Tank mit Flachboden ist, wobei oberhalb des Überwachungsraumes (50) eine dichte Sensorkabelein- und -ausführung in Form eines Wandanschlusses mit Verbindungsrohr (7) vorgesehen ist, wobei durch das Innere des Verbindungsrohres (7) das Sensorkabel (6) zur Zwischenlage (3) geführt ist, wodurch mittels der Sensorkabelein- bzw. -ausführung und dem Verbindungsrohr (7) ein Abdrücken des Überwachungsraumes (50) bei nachträglicher Herstellung des doppelwandigen Tankbodens möglich ist.

## Claims

1. Device for the long-term leakage monitoring in double-walled container systems, particularly in double-walled tank bottoms comprising a monitoring space between an outer base (2) and an inner base (5), the inner base (5) being supported by an intermediate layer (3), which is connected to the outer base (2), and also comprising a liquid-specific sensor cable (6), which is arranged at least in free sections of the intermediate layer (3), the sensor cable (6) changing its relative permittivity locally in accordance with the type and amount of liquid infiltrating into the monitoring space and the kind as well as the position of the liquid infiltration being determined by means of impacting the sensor cable with pulse echoes,
characterised in that
at least parts of a metallic intermediate layer (3), which is connected to the outer base (2), are arranged essentially perpendicular to a downward direction (G) of the outer base (2) and that the metallic intermediate layer (3) has recesses (15,16), so that a fluid infiltrating into the monitoring space (50) can diffuse substantially along the downwards direction (G) towards the sensor cable (6), so that the diffusion speed and the size of a leakage can be determined.

2. Device according to Claim 1,
characterised in that
the intermediate layer (3), which is welded to the inner side of the base, consists of symmetrical angle steel, and that the recesses (15,16) in the members (4) of the angle steel are designed crescent-shaped and/or square-shaped and/or triangular respectively and lying offset and opposite one another.

3. Device according to Claims 1 and 2,
characterised in that
the intermediate layer (3) is arranged such that the sensor cable (6) can be laid in a meandering manner at least partly within the intermediate layer.

4. Device according to Claims 1 and 2,
characterised in that
the sensor cable (6) is laid in a spiralling configuration on the inner side of the outer base (2).

5. Device according to Claims 1 and 2,
characterised in that,
the sensor cable (6) is laid in concentric circles on the inner side of the outer base (2) with varying radii, a plurality of sensor cable inlets and outlets (17,18) being provided for attaching and connecting the sensor cable (6) to an evaluation device outwith the tank.

6. Device according to one of the Claims 1 to 5,
characterised in that
the sensor cable (6) is a coaxial cable with a dielectric which can be reversed by means of liquid or the effect of moisture, a high frequency pulse echo image of the sensor cable (6) in its normal state being determined once or several times for calibration purposes.

7. Device according to one of the claims 1 to 6,
characterised in that,
the container system is a substantially cylindrical tank with a flat bottom, there being a sealed sensor cable inlet and outlet in the form of a wall connection with connection pipe(7) above the monitoring space (50), the sensor cable(6) being led to the intermediate layer (3) through the interior of the connection pipe (7), by means of which, by means of the sensor cable inlet or outlet and the connection pipe (7), the monitoring space (50) can be tested under pressure if the double-walled tank bottom is subsequently added.

## Revendications

1. Dispositif de surveillance de longue durée pour la détection des fuites sur des systèmes de récipients à double paroi, en particulier des fonds de réservoirs à double paroi, comprenant un espace de surveillance entre un fond extérieur (2) et un fond intérieur (5), le fond intérieur (5) étant supporté par une couche intermédiaire (3) qui est jointe au fond extérieur (2), et un câble détecteur (6) sélectif des liquides qui est placé au moins dans des parties libres de la couche intermédiaire (3), ce câble détecteur (6) changeant localement de constante diélectrique en fonction de la nature et de la quantité du liquide qui pénètre dans l'espace de surveillance, et la nature et l'endroit de la pénétration de liquide étant déterminés par action d'échos d'impulsions sur le câble détecteur, caractérisé par le fait qu'au moins des parties d'une couche intermédiaire métallique (3) jointe au fond extérieur (2) sont placées sensiblement perpendiculairement à une direction de pente (G) du fond extérieur (2) et la couche intermédiaire métallique (3) présente des évidements (15, 16), de sorte qu'un liquide qui pénètre dans l'espace de surveillance (50) peut se propager sensiblement dans la direction de pente (G) vers le câble détecteur (6), ce qui permet de déterminer la vitesse de propagation et la grandeur d'une fuite.

2. Dispositif selon la revendication 1, caractérisé par le fait que la couche intermédiaire (3), soudée à la face intérieure du fond, est constituée de cornière à ailes égales et les évidements (15, 16), en arc de cercle et/ou rectangulaires et/ou triangulaires, sont faits opposés et décalés dans les ailes (4) de la cornière.

3. Dispositif selon les revendications 1 et 2, caractérisé par le fait que la couche intermédiaire (3) est placée de façon qu'une pose en méandres du câble détecteur (5) soit possible au moins en partie à l'intérieur de la couche intermédiaire (3).

4. Dispositif selon les revendications 1 et 2, caractérisé par le fait que le câble détecteur (6) est posé en spirale sur la face intérieure du fond extérieur (2).

5. Dispositif selon les revendications 1 et 2, caractérisé par le fait que le câble détecteur (6) est posé sur des cercles concentriques sur la face intérieure du fond extérieur (2) avec des diamètres différents et plusieurs entrées et sorties de câble détecteur (17, 18) sont prévues pour la liaison et la connexion du câble détecteur (6) à un dispositif d'exploitation situé à l'extérieur du réservoir.

6. Dispositif selon l'une des revendications 1 à 5, caractérisé par le fait que le câble détecteur (6) est un câble coaxial ayant un diélectrique modifiable de manière réversible par liquide ou par action d'humidité, et à l'état normal, une image d'écho d'impulsions à haute fréquence du câble détecteur (6) est déterminée une ou plusieurs fois aux fins d'étalonnage.

7. Dispositif selon l'une des revendications 1 à 6, caractérisé par le fait que le système de récipient est un réservoir sensiblement cylindrique à fond plat, au-dessus de l'espace de surveillance (50) est prévue une entrée et sortie étanche de câble détecteur formée d'un raccord de paroi à tuyau de liaison (7), et le câble détecteur (6) va à la couche intermédiaire (3) par l'intérieur du tuyau de liaison (7), de sorte que l'entrée ou la sortie de câble détecteur et le tuyau de liaison (7) permettent de soumettre l'espace de surveillance (50) à une épreuve de pression en cas de réalisation ultérieure d'un fond de réservoir à double paroi.
